# EUROPEAN PATENT SPECIFICATION

(11) **EP 3 942 853 B1**
(45) Date of publication and mention of the grant of the patent: **26.11.2025**
(21) Application number: 19722836.4
(22) Date of filing: 02.05.2019
(51) Int. Cl.: H04W 4/70, H04L 9/40, H04W 12/069, H04W 12/63, H04W 88/04, H04W 4/80, H04W 12/084

(54) **A MOBILE DEVICE FOR CONTROLLING AN INTERNET OF THINGS DEVICE**
MOBILE VORRICHTUNG ZUR STEUERUNG EINER INTERNET-DER-DINGE-VORRICHTUNG
DISPOSITIF MOBILE POUR COMMANDER UN DISPOSITIF DE L'INTERNET DES OBJETS

(43) Date of publication of application: 26.01.2022
(73) Proprietor: Huawei Cloud Computing Technologies Co., Ltd., Guizhou 550025 (CN)
(72) Inventor: SHAFRAN, Igor, 80992 Kista (SE); BARON, Ayal, 80992 Munich (DE); OFEK, Itamar, 80992 Munich (DE)
(74) Representative: Roth, Sebastian
(86) International application number: PCT/EP2019/061243
(87) International publication number: WO 2020/221456

(56) References cited:
- US-A1- 2018 084 424
- US-A1- 2018 293 823
- US-A1- 2019 088 059
- SEITZ L ET AL: "Authorization for the Internet of Things using OAuth 2.0; draft-ietf-ace-oauth-authz-01.txt", INTERNET ENGINEERING TASK FORCE (IETF), 25 February 2016 (2016-02-25), XP015111365

## Description

### TECHNICAL FIELD

The present disclosure relates to the field of computer networks and Internet of Things (IoT). In particular, the present disclosure relates to a mobile device for controlling an IoT device, and to a corresponding management device. The present disclosure also relates to authorization of the mobile device and the IoT device, and to secure communication between said three devices.

### BACKGROUND

A conventional IoT device is a device, which can be connected to a network in a wired or wireless manner, and which can measure, save, process, transmit and/or receive data. It is desired that an IoT device consumes little power and can be operated in battery driven manner without the need for frequent charging or maintenance.

In order to support network connectivity, the conventional IoT device employs wired and/or wireless communication means, such as near range protocols like Bluetooth (BT), Bluetooth low energy (BTLE), or near-field communication (NFC), or long range protocols such as wireless local area network (WLAN). Manufacturing costs of an IoT device increase with the number of communication means supported. Interaction with an IoT device using all or a few of said communication means requires an established network connection, which also increases power consumption of the IoT device.

Further, in order to operate an IoT computer network system, deployment of a network infrastructure (e.g. wired and/or wireless) is required.

In addition, conventional IoT devices are often used in security or safety critical environments. Therefore, it is desirable that only authorized users or entities can control the conventional IoT device.

That is, conventional solutions suffer from high power consumption, high manufacturing costs, potential malicious abuse and the need for the deployment of a network infrastructure.

US 2018/293823 Al discloses a system and method for access control.

US 2018/84424 A1 discloses a method of providing secure access to hotel iot services through mobile devices.

US 2019/88059 Al discloses extended instant guest access using near field communication tags.

### SUMMARY

In view of the above-mentioned problems and disadvantages, the present invention aims to improve the operation of a conventional network IoT device. To this end, the present invention provides a mobile device, an IoT device and a management device. The invention is set out in the appended set of claims.

The embodiments of present invention in particular enables to extend the communication range of an IoT device that supports near range protocols for wireless communication. The embodiments of present invention therefore provides a mobile device (such as a mobile phone, or a smartphone) which forwards communication of an IoT device that lacks long range protocols (such as WLAN), but only implements near range protocols (such as BT, BTLE, or NFC). Of course, the mobile device also supports IoT devices of which the long range protocols are implemented but switched off. If an IoT device does not implement, or does not need to switch on a long-range protocol, power consumption of the IoT device can be decreased.

The mobile device of the present invention also can control the IoT device in an authorized and secure manner. Only an authorized mobile device can effectively convey secure information between the IoT device, and e.g. a management device, to which the mobile device is also connected. To this end, the mobile device can establish a secure communication channel between the IoT device and the management device. Thereby, the mobile device acts as a conduit between the IoT device and the management device, such that e.g. an access token can be exchanged.

More specifically, the mobile device can relay communication between the IoT device and the management device and can securely identify the IoT device and/or the mobile device.

To authenticate itself at the IoT device and/or to control the IoT device, the mobile device can receive an access token from the management device. The access token in particular can be time-limited, such that authentication or control is only granted for a predefined period of time.

The mobile device and/or the IoT device can also implement an optional proximity sensor, based on which a communication function or an authorization function of the mobile device and/or the IoT device can be triggered. This further reduces power consumption of the IoT device.

The object of the present invention is achieved by the solution provided in the enclosed independent claims. Advantageous implementations of the present invention are further defined in the dependent claims.

A first aspect of the present invention provides a mobile device for controlling an Internet of Things, IoT, device. The mobile device is configured to obtain a first access token from a management device provide a request for authorization of the mobile device to the management device, based on the first access token; forward a request for authorization of the IoT device to the management device; obtain a second access token from the management device, based on authorization of the mobile device and based on authorization of the IoT device; and control the IoT device based on the second access token.

This is beneficial, as a low power IoT device can be supported by the mobile device, so that the IoT device does not require constant network connectivity.

This also ensures that ad-hoc piggybacking of the mobile device's network to control the IoT device using the same mobile device is possible. In other words, the network infrastructure of the mobile device can be used as an asset to carry data between an IoT device and a management device. Once the IoT device is in the proximity of an authorized mobile device, the IoT device can use the network of the mobile device to securely reach the management device without requiring a dedicated data channel.

This also allows for auditing customer activities. Further, an attack surface can be reduced (due to time limited connectivity of the mobile device to the IoT device). Also, a customer's mobile device secure channel reduces power and data path infrastructure costs and requirements. This solution also brings a new level of user experience for a customer that carries mobile digital identities.

In particular, a point of sale (PoS) device is integrated in the management device. In particular, the PoS device is a PoS device in a retail store. In particular, the PoS device is a sales solution provided by means of a computer network, e.g. an online store. This can e.g. be the case when the PoS device is an online store, provided by means of a network based computer system, which also provides the management device.

In particular, authorization of the mobile device is obtained based on the request for authorization of the mobile device.

In particular, authorization of the IoT device is obtained based on the request for authorization of the IoT.

In an implementation form of the first aspect, the mobile device is further configured to provide a service request to the management device, and obtain the first access token based on the service request.

In particular, the service request can alternatively or additionally be provided to the PoS device, and the first access token can be obtained from the PoS device based on the service request.

In another implementation form of the first aspect, the first access token is time-limited and/or the second access token is time-limited.

In another implementation form of the first aspect, the mobile device is further configured to determine if the IoT device is in the proximity of the mobile device; and provide the request for authorization of the mobile device to the management device and forward the request for authorization of the IoT device to the management device, if the IoT device is in the proximity of the mobile device.

In particular, the proximity is a detect range of the mobile device. In case that near field communication, NFC, is used, the detect range may be 0-10 cm. In case that radiofrequency identification, RFID, is used, the detect range may be 0-100 cm.

In another implementation form of the first aspect, the mobile device is further configured to establish a secure connection between the mobile device and the management device, to provide the request for authorization of the mobile device, and/or to forward the request for authorization of the IoT device.

In another implementation form of the first aspect, the mobile device is further configured to establish a secure connection between the IoT device and the management device located in a communication network, to forward the request for authorization of the IoT device.

In particular, the second access token can also be obtained by means of the secure connection.

In another implementation form of the first aspect, the secure connection is established based on the first access token.

In another implementation form of the first aspect, the first access token is a cryptographic token, and/or wherein the second access token is a cryptographic token. The cryptographic token can e.g. be a public key infrastructure (PKI) certificate.

A second aspect of the present invention provides an Internet of Things, IoT, device, for communication with a mobile device, wherein the IoT device is configured to provide a request for authorization of the IoT device to the mobile device; obtain an access token, based on authorization of the IoT device from the mobile device; obtain a control instruction from the mobile device; and perform an operation based on the access token and the control instruction.

In particular, the access token which is obtained by the IoT device relates to the second cryptographic token which is used by the mobile device to control the IoT device.

In particular, authorization of the IoT device is obtained based on the request for authorization of the IoT.

In an implementation form of the second aspect, the access token is time limited.

In another implementation form of the second aspect, the IoT device is further configured to determine if the mobile device is in the proximity of the IoT device; and provide the request for authorization of the IoT device, if the mobile device is in the proximity of the IoT device.

In particular, the proximity is a detect range of the IoT device. In case that near field communication, NFC, is used, the detect range may be 0-10 cm. In case that radiofrequency identification, RFID, is used, the detect range may be 0-100 cm.

In another implementation form of the second aspect, the IoT device is further configured to provide the request for authorization of the IoT device by means of a secure connection between the IoT device and the management device, wherein the secure connection is established by the mobile device.

In particular, since the secure connection is established by the mobile device, and since the request for authorization of the IoT device is provided by means of a secure connection between the IoT device and the management device, this means that the mobile device indirectly forwards the request for authorization of the IoT device to the management device.

In particular, the access token can also be obtained by means of the secure connection.

In another implementation form of the second aspect, the access token is a cryptographic token. The cryptographic token can e.g. be a PKI certificate.

A third aspect of the present invention provides a management device for authorizing a mobile device and/or an Internet of Things, IoT, device, wherein the management device is configured to obtain a request for authorization of the mobile device from the mobile device and perform authorization of the mobile device; obtain a request for authorization of the IoT device from the mobile device and perform authorization of the IoT device; determine an access token, based on authorization of the mobile device and based on authorization of the IoT device; and provide the access token to the mobile device.

In particular, the access token which is determined and provided by the management device relates to the second access token which is obtained by the mobile device.

In particular, the authorization of the mobile device is performed based on the request for authorization of the mobile device.

In particular, the authorization of the IoT device is performed based on the request for authorization of the IoT device.

In an implementation form of the third aspect, the request for authorization of the mobile device and/or the request for authorization of the IoT device is/are obtained by means of a secure connection with the mobile device, and/or with the IoT device.

In particular, also the cryptographic token can be provided by a secure connection.

In another implementation form of the third aspect, the access token is a cryptographic token. The cryptographic token can e.g. be a PKI certificate.

A fourth aspect of the present invention provides a method for controlling an Internet of Things, IoT, device, wherein the method comprises the steps of obtaining, by a mobile device, a first access token from a management device; providing, by the mobile device, a request for authorization of the mobile device to the management device, based on the first access token; forwarding, by the mobile device, a request for authorization of the IoT device to the management device; obtaining, by the mobile device, a second access token from the management device, based on authorization of the mobile device and based on authorization of the IoT device; and controlling, by the mobile device, the IoT device based on the second access token.

In particular, a point of sale (PoS) device is integrated in the management device. **In** particular, the PoS device is a PoS device in a retail store. In particular, the PoS device is a sales solution provided by means of a computer network, e.g. an online store. This can e.g. be the case when the PoS device is an online store, provided by means of a network based computer system, which also provides the management device.

In particular, authorization of the mobile device is obtained based on the request for authorization of the mobile device.

In particular, authorization of the IoT device is obtained based on the request for authorization of the IoT.

In an implementation form of the fourth aspect, the method further includes providing, by the mobile device, a service request to the management device, and obtaining, by the mobile device, the first access token based on the service request.

In particular, the service request can alternatively or additionally be provided to the PoS device, and the first access token can be obtained from the PoS device based on the service request.

In another implementation form of the fourth aspect, the first access token is time-limited and/or the second access token is time-limited.

In another implementation form of the fourth aspect, the method further includes determining, by the mobile device, if the IoT device is in the proximity of the mobile device; and providing, by the mobile device, the request for authorization of the mobile device to the management device and forwarding, by the mobile device, the request for authorization of the IoT device to the management device, if the IoT device is in the proximity of the mobile device.

In particular, the proximity is a detect range of the mobile device. In case that near field communication, NFC, is used, the detect range may be 0-10 cm. In case that radiofrequency identification, RFID, is used, the detect range may be 0-100 cm.

In another implementation form of the fourth aspect, the method further includes establishing, by the mobile device, a secure connection between the mobile device and the management device, to provide the request for authorization of the mobile device, and/or to forward the request for authorization of the IoT device.

In another implementation form of the fourth aspect, the method further includes establishing, by the mobile device, a secure connection between the IoT device and the management device located in a communication network, to forward the request for authorization of the IoT device.

In particular, the second access token can also be obtained by means of the secure connection.

In another implementation form of the fourth aspect, the secure connection is established based on the first access token.

In another implementation form of the fourth aspect, the first access token is a cryptographic token, and/or the second access token is a cryptographic token. The cryptographic token can e.g. be a PKI certificate.

The fourth aspect and its implementation forms include the same advantages as the first aspect and its respective implementation forms.

A fifth aspect of the present invention provides a method for communication with a mobile device, wherein the method comprises the steps of providing, by an Internet of Things, IoT, device, a request for authorization of the IoT device to the mobile device; obtaining, by the IoT device, an access token, based on authorization of the IoT device from the mobile device; obtaining, by the IoT device, a control instruction from the mobile device; performing, by the IoT device, an operation based on the access token and the control instruction.

In particular, the access token which is obtained by the IoT device relates to the second cryptographic token which is used by the mobile device to control the IoT device.

In particular, authorization of the IoT device is obtained based on the request for authorization of the IoT.

In an implementation form of the fifth aspect, the access token is time limited.

In another implementation form of the fifth aspect, the method further includes determining, by the IoT device, if the mobile device is in the proximity of the IoT device; and providing, by the IoT device the request for authorization of the IoT device, if the mobile device is in the proximity of the IoT device.

In particular, the proximity is a detect range of the IoT device. In case that near field communication, NFC, is used, the detect range may be 0-10 cm. In case that radiofrequency identification, RFID, is used, the detect range may be 0-100 cm.

In another implementation form of the fifth aspect, the method further includes providing, by the IoT device, the request for authorization of the IoT device by means of a secure connection between the IoT device and the management device, wherein the secure connection is established by the mobile device.

In particular, since the secure connection is established by the mobile device, and since the request for authorization of the IoT device is provided by means of a secure connection between the IoT device and the management device, this means that the mobile device indirectly forwards the request for authorization of the IoT device to the management device.

In particular, the access token can also be obtained by means of the secure connection.

In another implementation form of the fifth aspect, the access token is a cryptographic token. The cryptographic token can e.g. be a PKI certificate.

The fifth aspect and its implementation forms include the same advantages as the second aspect and its respective implementation forms.

A sixth aspect of the present invention provides a method for authorizing a mobile device and/or an Internet of Things, IoT, device, wherein the method comprises the steps of obtaining, by a management device, a request for authorization of the mobile device from the mobile device, and performing authorization of the mobile device; obtaining, by the management device, a request for authorization of the IoT device from the mobile device, and performing authorization of the IoT device; determining, by the management device, an access token, based on authorization of the mobile device and based on authorization of the IoT device; and providing, by the management device, the access token to the mobile device.

In particular, the access token which is determined and provided by the management device relates to the second access token which is obtained by the mobile device.

In particular, the authorization of the mobile device is performed based on the request for authorization of the mobile device.

In particular, the authorization of the IoT device is performed based on the request for authorization of the IoT device.

In an implementation form of the sixth aspect, the request for authorization of the mobile device and/or the request for authorization of the IoT device is/are obtained by means of a secure connection with the mobile device, and/or with the IoT device.

In particular, also the cryptographic token can be provided by a secure connection.

In another implementation form of the sixth aspect, the access token is a cryptographic token. The cryptographic token can e.g. be a PKI certificate.

The sixth aspect and its implementation forms include the same advantages as the third aspect and its respective implementation forms.

The invention also relates to a computer program, characterized in program code, which, when run by at least one processor in the mobile device or the IoT device causes said at least one processor to execute any method according to embodiments of the invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present invention will be explained in the following description of specific embodiments in relation to the enclosed drawings, in which
- FIG. 1: shows a schematic view of a mobile device according to an embodiment of the present invention
- FIG. 2: shows a schematic view of an IoT device according to an embodiment of the present invention
- FIG. 3: shows a schematic view of a management device according to an embodiment of the present invention
- FIG. 4: shows a schematic view of an operating scenario according to the present invention
- FIG. 5: shows another schematic view of an operating scenario according to the present invention
- FIG. 6: shows another schematic view of an operating scenario according to the present invention
- FIG. 7: shows another schematic view of an operating scenario according to the present invention
- FIG. 8: shows a schematic view of a method according to an embodiment of the present invention
- FIG. 9: shows a schematic view of another method according to an embodiment of the present invention
- FIG. 10: shows a schematic view of another method according to an embodiment of the present invention.

### DETAILED DESCRIPTION OF EMBODIMENTS

Illustrative embodiments of method, and apparatus for controlling an IoT device are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

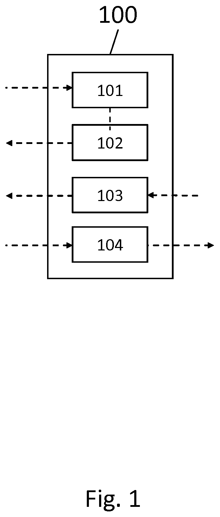

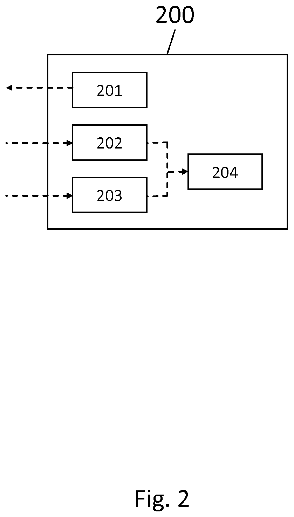

FIG. 1 shows a mobile device 100 for controlling an IoT device. The IoT device controlled by the mobile device 100 in particular is the IoT device 200 as it is going to be described in view of FIG. 2 below.

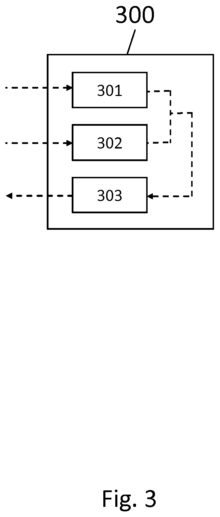

To control the IoT device 200, the mobile device 100 is configured to obtain a first access token 101. In particular, the first access token 101 can be obtained from the management device 300, as it is going to be described below in view of FIG. 3. The first access token 101 can e.g. be obtained from the management device 300 based on request of the mobile device 100. The first access token 101 can e.g. be obtained in response to purchasing a specific service, e.g. booking a hotel room, renting a car, or any other service.

The mobile device 100 is further configured to provide a request for authorization 102 of the mobile device 100 to the management device 300, based on the first access token 101, and to forward a request for authorization 103 of the IoT device 200 to the management device 300. Thereby, the mobile device 100 and the IoT device 200 can be authenticated at the management device 300. In particular it is determined if the mobile device 100 is the mobile device 100 that it pretends to be, and if the IoT device 200 is the device it pretends to be. It is further decided, if the mobile device 100 is allowed to control the IoT device 200, and if the IoT device 200 is allowed to be controlled by the mobile device 100.

To control the IoT device 200, the mobile device 100 is configured to obtain a second access token 104 from the management device 300, based on authorization of the mobile device 100 and based on authorization of the IoT device 200. The second access token 104 that is obtained by the mobile device 100 in particular relates to the access token 303 provided by the management device 300.

The mobile device 100 is further configured to control the IoT device 200 based on the second access token 104.

The first access token 101 and/or the second access token 104 can be time limited. That is e.g. the case, if the purchased service is only valid for a predefined period of time. For example, the hotel room is only booked for one night, or the car is only rented for one day. The present invention is of course not restricted to be only used with doors or cars.

FIG. 2 shows an IoT device 200, for communication with a mobile device 100. The mobile device 100 in particular is the mobile device 100 of FIG. 1.

The IoT device 200 is configured to provide a request for authorization 201 of the IoT device 200 to the mobile device 100. This request can in turn be forwarded by the mobile device 100 to the management device 300. Thereby, the IoT device 200 can prove its authenticity to the management device 300. The management device 300 can in turn allow the IoT device 200 to be controlled by the mobile device 100.

The IoT device 200 is configured to obtain an access token 202, based on authorization of the IoT device 200 from the mobile device 100. The access token 202 obtained by the IoT device 200 in particular relates to the access token 104 provided by the mobile device 100.

The IoT device 200 is further configured to obtain a control instruction 203 from the mobile device 100, and to perform an operation 204 based on the access token 202 and the control instruction 203. The operation e.g. may include unlocking a hotel room door, or unlocking and starting a rented car. The access token 202 again can be time limited, so that the room or the car can only be operated for a predefined amount of time. The embodiments of present invention are of course not restricted to be only used with doors or cars.

FIG. 3 shows a management device 300 for authorizing a mobile device 100 (e.g. the mobile device 100 of FIG. 1) and/or an IoT device 200 (e.g. the IoT device of FIG. 2)

The management device 300 is configured to obtain a request for authorization 301 of the mobile device 100 from the mobile device 100 and perform authorization of the mobile device 100. The request for authorization 301 relates to the request for authorization 102 sent by the mobile device 100.

The management device 300 is further configured to obtain a request for authorization 302 of the IoT device 200 from the mobile device 100 and perform authorization of the IoT device 200. The request for authorization 302 relates to the request for authorization 103 sent by the mobile device 100.

The management device 300 is further configured to determine an access token 303, based on authorization of the mobile device 100 and based on authorization of the IoT device 200 and to provide the access token 303 to the mobile device 100.

During authorization of the mobile device 100 it is decided, if the mobile device 100 is allowed to control the IoT device 200. During authorization of the IoT device 200, it is decided if the IoT device 200 is allowed to be controlled by the mobile device 100.

The management device 300 can also be configured to provide an access token to a mobile device 100, upon purchasing of a service by the mobile device 100. This access token relates to the first access token 101 obtained by the mobile device 100.

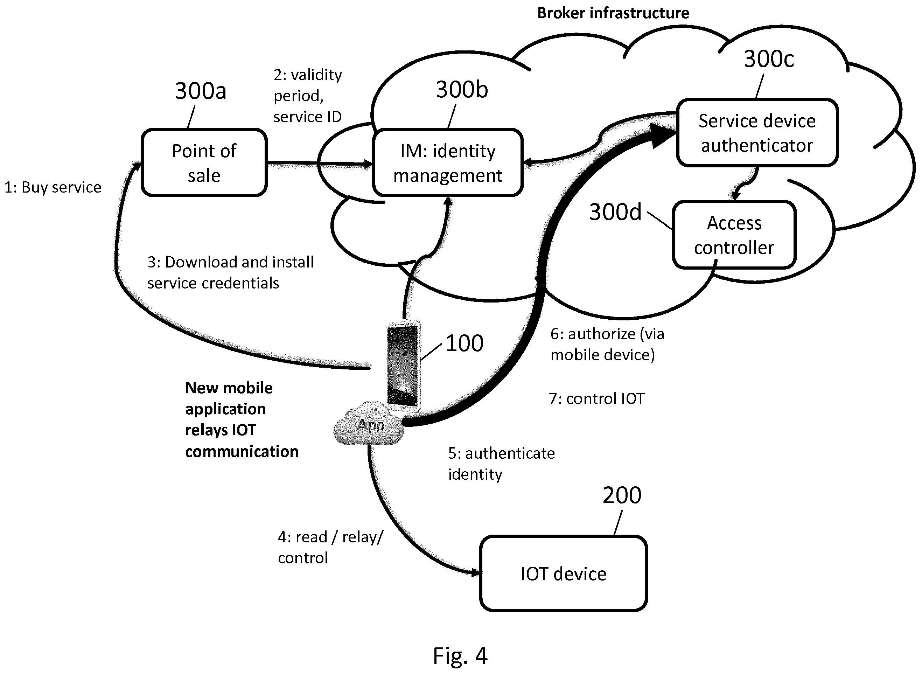

FIG. 4 shows an operating scenario of the mobile device 100, the IoT device 200, and the management device 300. In FIG. 4, the entities labelled with reference signs 300a, 300b, 300c and 300d form the management device 300.

The illustrated operating scenario comprises the following steps:
A customer buys a service from a point of sale 300a or registers via a registration kiosk. During this process, the customer may define a time period during which he will be entitled to use the service.

Once purchase/registration is confirmed, the gathered details are passed to an identity management entity 300b (which is part of the management device 300).

The identity management entity 300b issues a confirmation to a mobile device 100 and/or mobile application installed on the mobile device 100 and downloads and installs service credentials (i.e. the first access token 101) required to access a network at a physical location of the purchased service.

The customer arrives at the service location carrying the mobile device 100.

The mobile device 100 authenticates itself with a local network using the set of credentials installed earlier.

Once the mobile device 100 is on-boarded and authenticated on a service network (e.g. by the service device authenticator 300c), local network controller grants the access controller 300d rights to respect communication from one or more locally present IoT devices 200 mediated by the authenticated mobile device 100.

When the mobile device 100 is in proximity of the IoT device 200 or actively connects to it via NFC mobile phone, the mobile application proxies near field communication from the IoT device 200 towards the access controller 300d.

The access controller 300d decides to respect/abandon communication according to a policy granted to mobile device 100.

Following the previously mediated IoT device request, access controller 300d may instruct the IoT device 200 to perform an additional operation, for instance open a lock or switch on a light etc.

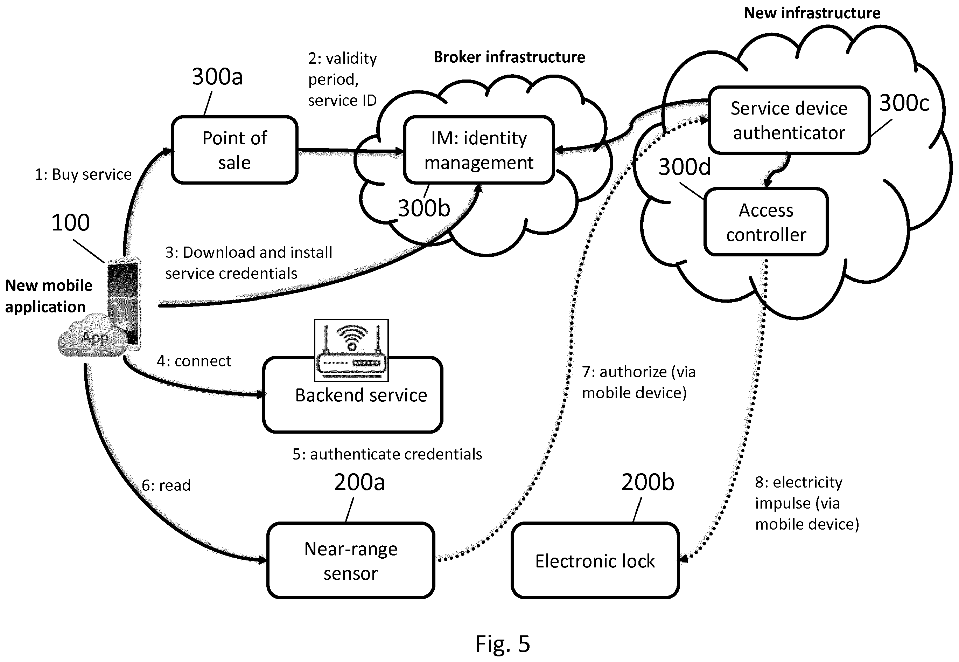

FIG. 5 shows an operating scenario of the mobile device 100, the IoT device 200, and the management device 300. In FIG. 5, the entities labelled with reference signs 300a, 300b, 300c and 300d form the management device 300. In FIG. 5, the entities labelled with reference signs 200a (Near-range sensor) and 200b (Electronic lock) form the IoT device 200. The operating scenario of FIG. 5 includes the features of the operating scenario of FIG. 4. In FIG. 5, the mobile device 100 is further connected to a backend service, e.g. for network connection.

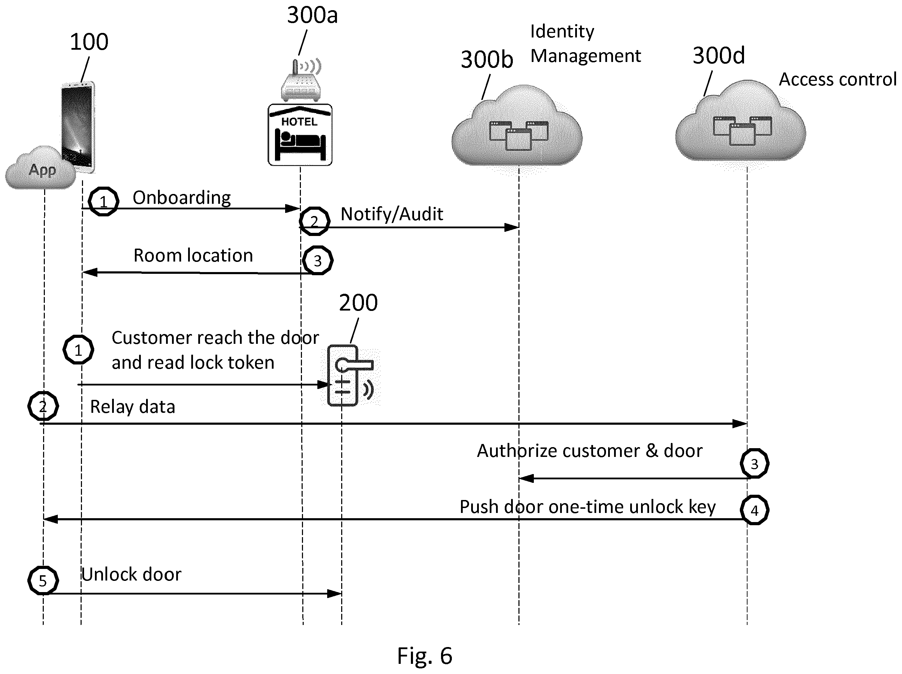

The operating scenario shown in FIG. 6 follows the general scheme as described in FIG. 4. In FIG. 6 however, the service relates to booking a room at a hotel. The service network is a local hotel Wi-Fi network. The IoT device 200 is a smart room lock, and the mobile device 100 is a guest mobile phone.

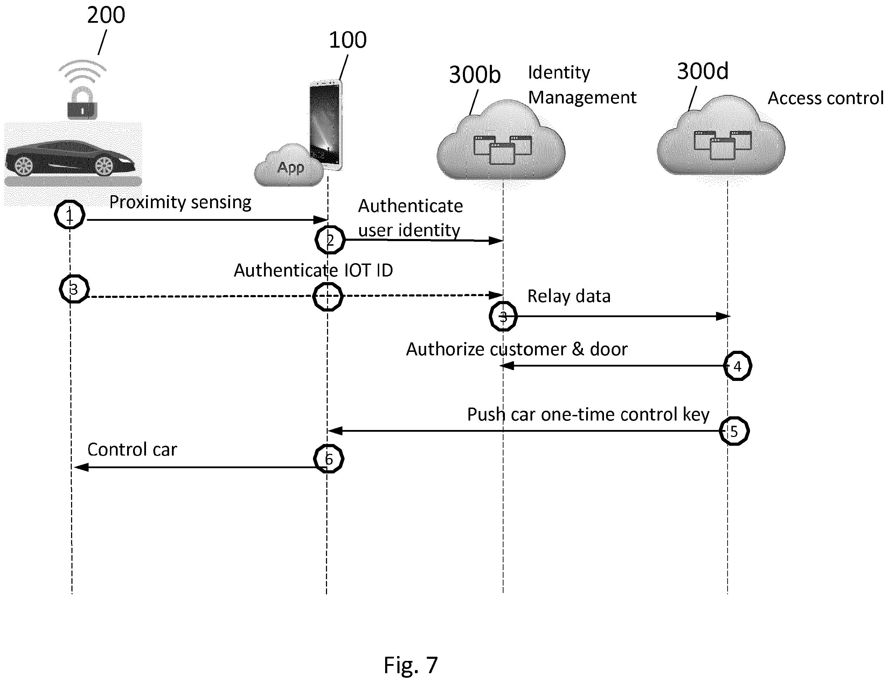

The operating scenario shown in FIG. 7 follows the general scheme as described in FIG. 4. In FIG. 6 however, the service relates to renting a car. The service network is a remote car lock control network. The IoT device 200 is a smart car lock, and the mobile device 100 is a driver's mobile phone.

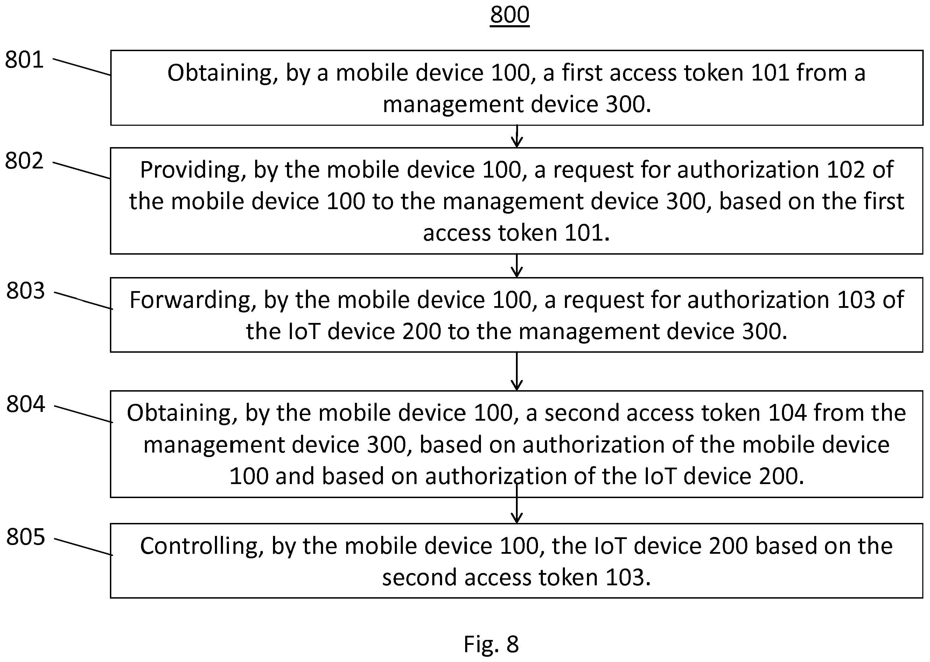

FIG. 8 shows a method 800 for controlling an IoT device 100. The method 800 comprises a step of obtaining 801, by a mobile device 100, a first access token 101 from a management device 300. The method 800 comprises a further step of providing 802, by the mobile device 100, a request for authorization 102 of the mobile device 100 to the management device 300, based on the first access token 101. The method 800 comprises a further step of forwarding 803, by the mobile device 100, a request for authorization 103 of the IoT device 200 to the management device 300. The method 800 comprises a further step of obtaining 804, by the mobile device 100, a second access token 104 from the management device 300, based on authorization of the mobile device 100 and based on authorization of the IoT device 200. The method 800 comprises a further step of controlling 805, by the mobile device 100, the IoT device 200 based on the second access token 104.

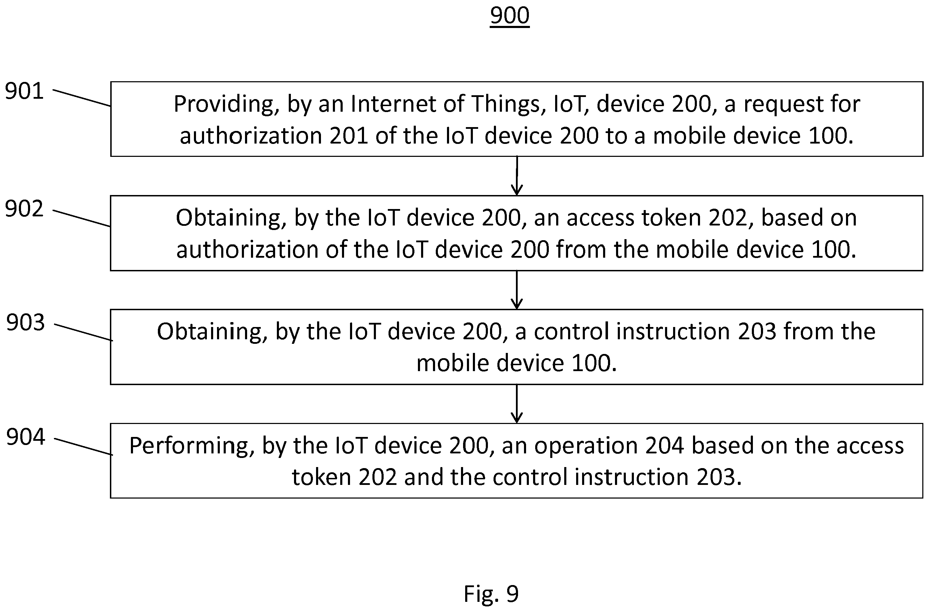

FIG. 9 shows a method 900 for communication with a mobile device 100, wherein the method 900 comprises a step of providing 901, by an IoT device 200, and a request for authorization 201 of the IoT device 200 to the mobile device 100. The method 900 comprises a further step of obtaining 902, by the IoT device 200, an access token 202, based on authorization of the IoT device 200 from the mobile device 100. The method 900 comprises a further step of obtaining 903, by the IoT device 200, a control instruction 203 from the mobile device 100. The method 900 comprises a further step of performing 904, by the IoT device 200, an operation 204 based on the access token 202 and the control instruction 203.

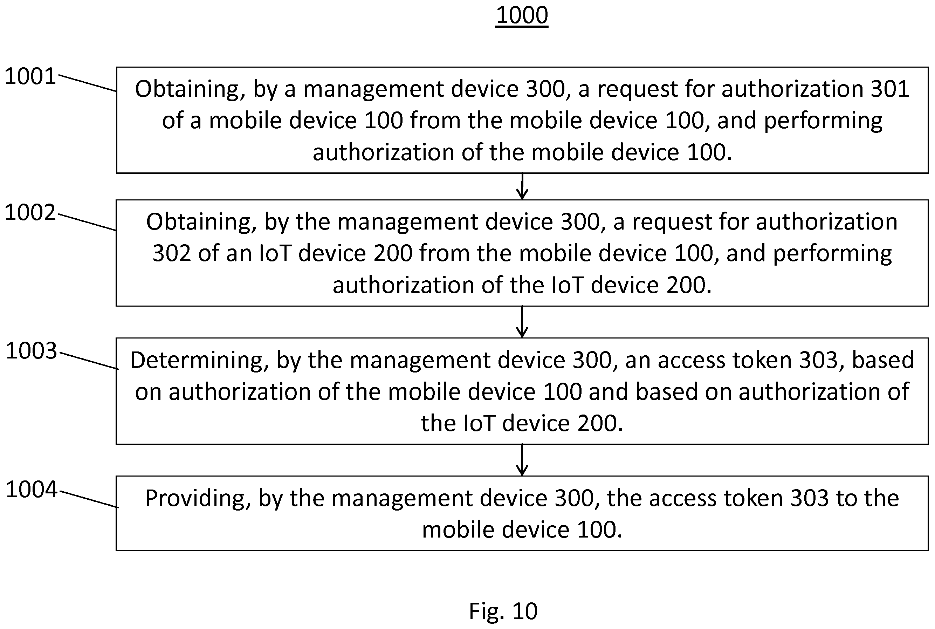

FIG. 10 shows a method 1000 for authorizing a mobile device 100 and/or an IoT device 200, wherein the method 1000 comprises a step of obtaining 1001, by a management device 300, a request for authorization 301 of the mobile device 100 from the mobile device 100, and performing authorization of the mobile device 100. The method 1000 further comprises a step of obtaining 1002, by the management device 300, a request for authorization 302 of the IoT device 200 from the mobile device 100, and performing authorization of the IoT device 200. The method 1000 further comprises a step of determining 1003, by the management device 300, an access token 303, based on authorization of the mobile device 100 and based on authorization of the IoT device 200. The method 1000 further comprises a step of providing 1004, by the management device 300, the access token 303 to the mobile device 100.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A mobile device (100) for controlling an Internet of Things, IoT, device (200), wherein the mobile device (100) is configured to:
- obtain a first access token (101) from a management device (300);
- provide a request for authorization (102) of the mobile device (100) to the management device (300), based on the first access token (101);
- forward a request for authorization (103) of the IoT device (200) to the management device (300);
- obtain a second access token (104) from the management device (300), based on authorization of the mobile device (100) and based on authorization of the IoT device (200);
- control the IoT device (200) based on the second access token (104)
- determine if the IoT device (200) is in the proximity of the mobile device (100); and
- provide the request for authorization (102) of the mobile device (100) to the management device (300) and forward the request for authorization (103) of the IoT device (200) to the management device (300), if the IoT device (200) is in the proximity of the mobile device (100).

2. The mobile device (100) according to claim 1, wherein the mobile device (100) is further configured to:
- provide a service request to the management device (300), and
- obtain the first access token (101) based on the service request.

3. The mobile device (100) according to claim 1 or 2, wherein the first access token (101) is time-limited and/or the second access token (104) is time-limited.

4. The mobile device (100) according to any one of the preceding claims, wherein the mobile device (100) is further configured to establish a secure connection between the mobile device (100) and the management device (300), to provide the request for authorization (102) of the mobile device (100), and/or to forward the request for authorization (103) of the IoT device (200).

5. The mobile device (100) according to any one of the preceding claims, wherein the mobile device (100) is further configured to establish a secure connection between the IoT device (200) and the management device (300) located in a communication network, to forward the request for authorization (103) of the IoT device (200).

6. An Internet of Things, IoT, device (200), for communication with a mobile device (100), wherein the IoT device (200) is configured to:
- provide a request for authorization (201) of the IoT device (200) to the mobile device (100);
- obtain an access token (202), based on authorization of the IoT device (200) from the mobile device (100);
- obtain a control instruction (203) from the mobile device (100);
- perform an operation (204) based on the access token (202) and the control instruction (203)
- determine if the mobile device (100) is in the proximity of the IoT device (200); and
- provide the request for authorization (201) of the IoT device (200), if the mobile device (100) is in the proximity of the IoT device (200).

7. The IoT device (200) according to claim 6, wherein the access token (202) is time limited.

8. The IoT device (200) according to any of claims 6 or 7, wherein the IoT device (200) is further configured to provide the request for authorization (201) of the IoT device (200) by means of a secure connection between the IoT device (200) and the management device (300), wherein the secure connection is established by the mobile device (100).

9. A method (800) for controlling an Internet of Things, IoT, device (100), wherein the method (800) comprises the steps of:
- obtaining (801), by a mobile device (100), a first access token (101) from a management device (300);
- providing (802), by the mobile device (100), a request for authorization (102) of the mobile device (100) to the management device (300), based on the first access token (101);
- forwarding (803), by the mobile device (100), a request for authorization (103) of the IoT device (200) to the management device (300);
- obtaining (804), by the mobile device (100), a second access token (104) from the management device (300), based on authorization of the mobile device (100) and based on authorization of the IoT device (200);
- controlling (805), by the mobile device (100), the IoT device (200) based on the second access token (103);
- determining, by the mobile device, if the IoT device is in the proximity of the mobile device; and
- providing, by the mobile device, the request for authorization of the mobile device to the management device and forwarding, by the mobile device, the request for authorization of the IoT device to the management device, if the IoT device is in the proximity of the mobile device.

10. A method (900) for communication with a mobile device (100), wherein the method (900) comprises the steps of:
- providing (901), by an Internet of Things, IoT, device (200), a request for authorization (201) of the IoT device (200) to the mobile device (100);
- obtaining (902), by the IoT device (200), an access token (202), based on authorization of the IoT device (200) from the mobile device (100);
- obtaining (903), by the IoT device (200), a control instruction (203) from the mobile device (100);
- performing (904), by the IoT device (200), an operation (204) based on the access token (202) and the control instruction (203);
- determining, by the IoT device, if the mobile device is in the proximity of the IoT device; and
- providing, by the IoT device the request for authorization of the IoT device, if the mobile device is in the proximity of the IoT device.

## Patentansprüche

1. Mobile Vorrichtung (100) zum Steuern einer Internet-der-Dinge-Vorrichtung, IoT-Vorrichtung (200), wobei die mobile Vorrichtung (100) zu Folgendem konfiguriert ist:
Erlangen eines ersten Zugriffstokens (101) von einer Verwaltungsvorrichtung (300);
Bereitstellen einer Autorisierungsanforderung (102) der mobilen Vorrichtung (100) an die Verwaltungsvorrichtung (300), basierend auf dem ersten Zugriffstoken (101);
Weiterleiten einer Autorisierungsanforderung (103) der IoT-Vorrichtung (200) an die Verwaltungsvorrichtung (300);
Erlangen eines zweiten Zugriffstokens (104) von der Verwaltungsvorrichtung (300), basierend auf einer Autorisierung der mobilen Vorrichtung (100) und basierend auf einer Autorisierung der IoT-Vorrichtung (200);
Steuern der IoT-Vorrichtung (200) basierend auf dem zweiten Zugriffstoken (104)
Bestimmen, ob sich die IoT-Vorrichtung (200) in der Nähe der mobilen Vorrichtung (100) befindet; und
Bereitstellen der Autorisierungsanforderung (102) der mobilen Vorrichtung (100) an die Verwaltungsvorrichtung (300) und Weiterleiten der Autorisierungsanforderung (103) der IoT-Vorrichtung (200) an die Verwaltungsvorrichtung (300), wenn sich die IoT-Vorrichtung (200) in der Nähe der mobilen Vorrichtung (100) befindet.

2. Mobile Vorrichtung (100) nach Anspruch 1, wobei die mobile Vorrichtung (100) ferner zu Folgendem konfiguriert ist:
Bereitstellen einer Dienstanforderung an die Verwaltungsvorrichtung (300) und
Erlangen des ersten Zugriffstokens (101) basierend auf der Dienstanforderung.

3. Mobile Vorrichtung (100) nach Anspruch 1 oder 2, wobei das erste Zugriffstoken (101) zeitlich begrenzt ist und/oder das zweite Zugriffstoken (104) zeitlich begrenzt ist.

4. Mobile Vorrichtung (100) nach einem der vorhergehenden Ansprüche, wobei die mobile Vorrichtung (100) ferner dazu konfiguriert ist, eine sichere Verbindung zwischen der mobilen Vorrichtung (100) und der Verwaltungsvorrichtung (300) herzustellen, um die Autorisierungsanforderung (102) der mobilen Vorrichtung (100) bereitzustellen und/oder die Autorisierungsanforderung (103) der IoT-Vorrichtung (200) weiterzuleiten.

5. Mobile Vorrichtung (100) nach einem der vorhergehenden Ansprüche, wobei die mobile Vorrichtung (100) ferner dazu konfiguriert ist, eine sichere Verbindung zwischen der IoT-Vorrichtung (200) und der Verwaltungsvorrichtung (300), die sich in einem Kommunikationsnetz befindet, herzustellen, um die Autorisierungsanforderung (103) der IoT-Vorrichtung (200) weiterzuleiten.

6. Internet-der-Dinge-Vorrichtung, IoT-Vorrichtung (200), zur Kommunikation mit einer mobilen Vorrichtung (100), wobei die IoT-Vorrichtung (200) zu Folgendem konfiguriert ist:
Bereitstellen einer Autorisierungsanforderung (201) der IoT-Vorrichtung (200) an die mobile Vorrichtung (100);
Erlangen eines Zugriffstokens (202), basierend auf einer Autorisierung der IoT-Vorrichtung (200) von der mobilen Vorrichtung (100);
Erlangen einer Steueranweisung (203) von der mobilen Vorrichtung (100);
Durchführen eines Vorgangs (204) basierend auf dem Zugriffstoken (202) und der Steueranweisung (203)
Bestimmen, ob sich die mobile Vorrichtung (100) in der Nähe der IoT-Vorrichtung (200) befindet; und
Bereitstellen der Autorisierungsanforderung (201) der IoT-Vorrichtung (200), wenn sich die mobile Vorrichtung (100) in der Nähe der IoT-Vorrichtung (200) befindet.

7. IoT-Vorrichtung (200) nach Anspruch 6, wobei das Zugriffstoken (202) zeitlich begrenzt ist.

8. IoT-Vorrichtung (200) nach einem der Ansprüche 6 oder 7, wobei die IoT-Vorrichtung (200) ferner dazu konfiguriert ist, die Autorisierungsanforderung (201) der IoT-Vorrichtung (200) mittels einer sicheren Verbindung zwischen der IoT-Vorrichtung (200) und der Verwaltungsvorrichtung (300) bereitzustellen, wobei die sichere Verbindung durch die mobile Vorrichtung (100) hergestellt wird.

9. Verfahren (800) zum Steuern einer Internet-der-Dinge-Vorrichtung, IoT-Vorrichtung (100), wobei das Verfahren (800) die folgenden Schritte umfasst:
Erlangen (801), durch eine mobile Vorrichtung (100), eines ersten Zugriffstokens (101) von einer Verwaltungsvorrichtung (300);
Bereitstellen (802), durch die mobile Vorrichtung (100), einer Autorisierungsanforderung (102) der mobilen Vorrichtung (100) an die Verwaltungsvorrichtung (300), basierend auf dem ersten Zugriffstoken (101);
Weiterleiten (803), durch die mobile Vorrichtung (100), einer Autorisierungsanforderung (103) von der IoT-Vorrichtung (200) an die Verwaltungsvorrichtung (300);
Erlangen (804), durch die mobile Vorrichtung (100), eines zweiten Zugriffstokens (104) von der Verwaltungsvorrichtung (300), basierend auf einer Autorisierung der mobilen Vorrichtung (100) und basierend auf einer Autorisierung der IoT-Vorrichtung (200);
Steuern (805), durch die mobile Vorrichtung (100), der IoT-Vorrichtung (200) basierend auf dem zweiten Zugriffstoken (103); Bestimmen, durch die mobile Vorrichtung, ob sich die IoT-Vorrichtung in der Nähe der mobilen Vorrichtung befindet; und Bereitstellen, durch die mobile Vorrichtung, der Autorisierungsanforderung der mobilen Vorrichtung an die Verwaltungsvorrichtung und Weiterleiten, durch die mobile Vorrichtung, der Autorisierungsanforderung der IoT-Vorrichtung an die Verwaltungsvorrichtung, wenn sich die IoT-Vorrichtung in der Nähe der mobilen Vorrichtung befindet.

10. Verfahren (900) zur Kommunikation mit einer mobilen Vorrichtung (100), wobei das Verfahren (900) die folgenden Schritte umfasst:
Bereitstellen (901), durch eine Internet-der-Dinge-Vorrichtung, IoT-Vorrichtung (200), einer Autorisierungsanforderung (201) der IoT-Vorrichtung (200) an die mobile Vorrichtung (100);
Erlangen (902), durch die IoT-Vorrichtung (200), eines Zugriffstokens (202), basierend auf einer Autorisierung der IoT-Vorrichtung (200) von der mobilen Vorrichtung (100);
Erlangen (903), durch die IoT-Vorrichtung (200), einer Steueranweisung (203) von der mobilen Vorrichtung (100);
Durchführen (904), durch die IoT-Vorrichtung (200), eines Vorgangs (204) basierend auf dem Zugriffstoken (202) und der Steueranweisung (203);
Bestimmen, durch die IoT-Vorrichtung, ob sich die mobile Vorrichtung in der Nähe der IoT-Vorrichtung befindet; und
Bereitstellen, durch die IoT-Vorrichtung, der Autorisierungsanforderung der IoT-Vorrichtung, wenn sich die mobile Vorrichtung in der Nähe der IoT-Vorrichtung befindet.

## Revendications

1. Dispositif mobile (100) pour commander un dispositif de l'Internet des objets, IoT (200), dans lequel le dispositif mobile (100) est configuré pour :
- obtenir un premier jeton d'accès (101) à partir d'un dispositif de gestion (300) ;
- fournir une demande d'autorisation (102) du dispositif mobile (100) au dispositif de gestion (300), sur la base du premier jeton d'accès (101) ;
- transmettre une demande d'autorisation (103) du dispositif IoT (200) au dispositif de gestion (300) ;
- obtenir un second jeton d'accès (104) à partir du dispositif de gestion (300), sur la base de l'autorisation du dispositif mobile (100) et sur la base de l'autorisation du dispositif IoT (200) ;
- commander le dispositif IoT (200) sur la base du second jeton d'accès (104)
- déterminer si le dispositif IoT (200) est à proximité du dispositif mobile (100) ; et
- fournir la demande d'autorisation (102) du dispositif mobile (100) au dispositif de gestion (300) et transmettre la demande d'autorisation (103) du dispositif IoT (200) au dispositif de gestion (300), si le dispositif IoT (200) est à proximité du dispositif mobile (100).

2. Dispositif mobile (100) selon la revendication 1, dans lequel le dispositif mobile (100) est également configuré pour :
- fournir une demande de service au dispositif de gestion (300), et
- obtenir le premier jeton d'accès (101) sur la base de la demande de service.

3. Dispositif mobile (100) selon la revendication 1 ou 2, dans lequel le premier jeton d'accès (101) est limité dans le temps et/ou le second jeton d'accès (104) est limité dans le temps.

4. Dispositif mobile (100) selon l'une quelconque des revendications précédentes, dans lequel le dispositif mobile (100) est également configuré pour établir une connexion sécurisée entre le dispositif mobile (100) et le dispositif de gestion (300), pour fournir la demande d'autorisation (102) du dispositif mobile (100), et/ou pour transmettre la demande d'autorisation (103) du dispositif IoT (200).

5. Dispositif mobile (100) selon l'une quelconque des revendications précédentes, dans lequel le dispositif mobile (100) est également configuré pour établir une connexion sécurisée entre le dispositif IoT (200) et le dispositif de gestion (300) situé dans un réseau de communication, pour transmettre la demande d'autorisation (103) du dispositif IoT (200).

6. Dispositif de l'Internet des objets, IoT (200), destiné à communiquer avec un dispositif mobile (100), dans lequel le dispositif IoT (200) est configuré pour :
- fournir une demande d'autorisation (201) du dispositif IoT (200) au dispositif mobile (100) ;
- obtenir un jeton d'accès (202), sur la base de l'autorisation du dispositif IoT (200) à partir du dispositif mobile (100) ;
- obtenir une instruction de commande (203) à partir du dispositif mobile (100) ;
- réaliser une opération (204) sur la base du jeton d'accès (202) et de l'instruction de commande (203)
- déterminer si le dispositif mobile (100) est à proximité du dispositif IoT (200) ; et
- fournir la demande d'autorisation (201) du dispositif IoT (200), si le dispositif mobile (100) est à proximité du dispositif IoT (200).

7. Dispositif IoT (200) selon la revendication 6, dans lequel le jeton d'accès (202) est limité dans le temps.

8. Dispositif IoT (200) selon l'une quelconque des revendications 6 ou 7, dans lequel le dispositif IoT (200) est également configuré pour fournir la demande d'autorisation (201) du dispositif IoT (200) au moyen d'une connexion sécurisée entre le dispositif IoT (200) et le dispositif de gestion (300), dans lequel la connexion sécurisée est établie par le dispositif mobile (100).

9. Procédé (800) de commande d'un dispositif de l'Internet des objets, IoT (100), dans lequel le procédé (800) comprend les étapes suivantes :
- l'obtention (801), par un dispositif mobile (100), d'un premier jeton d'accès (101) à partir d'un dispositif de gestion (300) ;
- la fourniture (802), par le dispositif mobile (100), d'une demande d'autorisation (102) du dispositif mobile (100) au dispositif de gestion (300), sur la base du premier jeton d'accès (101) ;
- la transmission (803), par le dispositif mobile (100), d'une demande d'autorisation (103) du dispositif IoT (200) au dispositif de gestion (300) ;
- l'obtention (804), par le dispositif mobile (100), d'un second jeton d'accès (104) à partir du dispositif de gestion (300), sur la base de l'autorisation du dispositif mobile (100) et sur la base de l'autorisation du dispositif IoT (200) ;
- la commande (805), par le dispositif mobile (100), du dispositif IoT (200) sur la base du second jeton d'accès (103) ;
- le fait de déterminer, par le dispositif mobile, si le dispositif IoT est à proximité du dispositif mobile ; et
- la fourniture, par le dispositif mobile, de la demande d'autorisation du dispositif mobile au dispositif de gestion et la transmission, par le dispositif mobile, de la demande d'autorisation du dispositif IoT au dispositif de gestion, si le dispositif IoT est à proximité du dispositif mobile.

10. Procédé (900) de communication avec un dispositif mobile (100), dans lequel le procédé (900) comprend les étapes suivantes :
- la fourniture (901), par un dispositif de l'Internet des objets, IoT (200), d'une demande d'autorisation (201) du dispositif IoT (200) au dispositif mobile (100) ;
- l'obtention (902), par le dispositif IoT (200), d'un jeton d'accès (202), sur la base de l'autorisation du dispositif IoT (200) à partir du dispositif mobile (100) ;
- l'obtention (903), par le dispositif IoT (200), d'une instruction de commande (203) à partir du dispositif mobile (100) ;
- la réalisation (904), par le dispositif IoT (200), d'une opération (204) sur la base du jeton d'accès (202) et de l'instruction de commande (203) ;
- le fait de déterminer, par le dispositif IoT, si le dispositif mobile est à proximité du dispositif IoT ; et
- la fourniture, par le dispositif IoT, de la demande d'autorisation du dispositif IoT, si le dispositif mobile est à proximité du dispositif IoT.
